# FASCICULE DE BREVET EUROPEEN

(11) **EP 3 344 866 B1**
(45) Date de publication et mention de la délivrance du brevet: **27.03.2024**
(21) Numéro de dépôt: 16766238.6
(22) Date de dépôt: 30.08.2016
(51) Int. Cl.: F02M 26/67, F02M 26/70, F16K 1/02, F16K 1/12, F16K 31/04, F16K 31/50, F16H 25/20, F16H 25/22

(54) **VANNE DE CIRCULATION DE GAZ D'ÉCHAPPEMENT**
ABGASVENTIL
EXHAUST GAS VALVE

(30) Priorité: 04.09.2015 FR 1558221
(43) Date de publication de la demande: 11.07.2018
(73) Titulaire: Valeo Systèmes de Contrôle Moteur, 95800 Cergy Saint Christophe (FR)
(72) Inventeur: RIBERA, Frédéric, 78260 Achères (FR); BATTISTELLA, Rudy, 95220 Herblay (FR); RIDOLFI, Gabriel, 27150 Hacqueville (FR); MARTIN, Nicolas, 78600 Maisons Laffitte (FR)
(74) Mandataire: Valeo Powertrain Systems
(86) Numéro de dépôt international: PCT/EP2016/070422
(87) Numéro de publication internationale: WO 2017/037065

(56) Documents cités:
- EP-A2- 1 111 227
- WO-A1-84/00592
- DE-A1- 2 141 519
- DE-A1- 10 057 836
- DE-A1- 19 902 434
- FR-A1- 2 748 780
- JP-A- 2007 211 698
- JP-A- 2015 152 069
- KR-A- 20110 028 878
- US-A1- 2010 308 242
- US-A1- 2012 012 766
- US-B1- 6 802 488

## Description

La présente invention concerne une vanne de circulation de gaz d'échappement pour moteur à combustion, comportant une vis à billes.

On connaît, par exemple par le brevet US 8,862,369, le principe de faire recirculer à l'admission une partie des gaz d'échappement d'un moteur à combustion. Cette technologie permet, lorsqu'elle est appliquée à un moteur à allumage commandé suralimenté, d'améliorer le rendement du moteur et ainsi de diminuer la consommation de carburant. Appliquée à un moteur diesel, elle permet de réduire les émissions de polluants, principalement d'oxydes d'azote. Pour ces raisons, la recirculation de gaz d'échappement est une technologie appliquée de manière standard sur les moteurs à combustion, notamment les moteurs d'automobiles. La recirculation de gaz d'échappement est couramment appelée EGR, abréviation du terme Anglais « Exhaust Gas Recirculation ». Afin d'optimiser le fonctionnement des moteurs, la quantité de gaz d'échappement recirculés est adaptée aux conditions de fonctionnement, et est contrôlée précisément par une vanne électrique commandée par l'unité électronique de commande du moteur du véhicule. Une telle vanne est décrite notamment par le brevet du demandeur FR 2 947 027, et par les brevets EP 1 111 227 A2 et FR 2 748 780 A1.

Le débit de gaz recirculés est géré par la position d'une soupape permettant d'obturer partiellement ou complètement le conduit de passage des gaz recirculés. Le mouvement de rotation d'un moteur électrique est transformé en un mouvement de translation de la soupape grâce à un mécanisme de transformée de mouvement.

Les évolutions apportées aux moteurs en cours de développement engendrent une évolution des performances attendues pour la vanne de recirculation.

Ainsi, la tendance à la réduction de la cylindrée des moteurs fait que la pression appliquée sur la soupape augmente. Les forces à générer par le mécanisme de commande de la soupape doivent donc augmenter.

L'exigence de fiabilité de la vanne est également de plus en plus élevée, l'usure du mécanisme au cours de la vie du produit doit donc être minimisée. De plus, le besoin de réduction continue du cout de revient des produits incite à créer des produits avec un nombre de composants réduits et faciles à assembler.

L'encombrement de la vanne doit être également minimisé, car l'espace disponible pour son implantation est de plus en plus réduit.

Le contrôle du débit de gaz d'échappement recirculés doit également être de plus en plus précis, afin de satisfaire les normes d'émissions de polluants, toujours plus sévères à chaque nouvelle norme.

Le but de l'invention est de proposer un mécanisme de transformée de mouvement ayant de meilleures performances sur l'ensemble de ces critères.

A cet effet, l'invention propose une vanne selon la revendication 1, et comportant notamment un dispositif d'actionnement pour moteur à combustion, comportant une vis à billes, la vis à billes comprenant :
- un écrou,
- une vis liée cinématiquement à l'écrou,
- des billes agencées pour assurer un mouvement relatif de l'écrou par rapport à la vis.

Des vannes comportant des dispositifs d'actionnement avec vis à billes sont par exemple connus dans d'autres domaines techniques par les brevets US 6 802 488 B1, US 2012/012766 A1, WO 84/00592 A1 et DE 21 41 519 A1.

Dans la vanne selon l'invention, les billes sont intercalées entre l'écrou et la vis, il n'y a pas de contact direct entre l'écrou et la vis. De préférence, les billes circulent dans un chemin hélicoïdal formé conjointement sur l'écrou et sur la vis.

Lorsque l'écrou et la vis ont un mouvement relatif l'un par rapport à l'autre, les billes roulent dans le chemin hélicoïdal. On peut ainsi avoir un déplacement relatif de la vis par rapport à l'écrou avec très peu de frottement.

Avantageusement, le chemin hélicoïdal est formé partiellement sur une paroi interne de l'écrou et sur une paroi externe de la vis.

Le chemin hélicoïdal est formé d'une portion de section circulaire creuse, balayant un profil hélicoïdal. Les billes sont situées entre la paroi interne de l'écrou et la paroi externe de la vis et sont ainsi guidées et maintenues dans le chemin hélicoïdal. En adaptant le diamètre des billes à l'espace disponible entre la paroi interne de l'écrou et la paroi externe de la vis, il est possible d'obtenir un jeu très faible, ou nul, dans le mécanisme.

Selon un mode de réalisation du dispositif, la vis à billes comporte un chemin de récupération des billes permettant de recevoir les billes venant d'une extrémité du chemin hélicoïdal et de les transférer vers l'autre extrémité du chemin hélicoïdal.

Les billes se déplaçant le long du canal hélicoïdal lors du mouvement relatif de l'écrou par rapport à la vis, les billes doivent être recirculées pour permettre un déplacement continu de l'ensemble des billes.

Préférentiellement, le chemin de récupération des billes est formé entre une paroi externe de l'écrou et une paroi interne de l'écrou.

Le chemin de récupération est ainsi formé par une cavité réalisée dans l'épaisseur de la paroi de l'écrou à billes. L'encombrement de l'écrou n'est pas augmenté.

Avantageusement, le chemin de récupération des billes comporte un tube solidarisé à l'écrou.

Dans ce cas, les billes circulent à l'intérieur du tube et sont protégées d'une éventuelle contamination extérieure. Le tube peut ne pas dépasser de la surface extérieure de l'écrou.

Alternativement, le tube dépasse de la surface extérieure de l'écrou. L'encombrement radial de l'écrou est alors augmenté.

Selon un autre mode de réalisation, le chemin hélicoïdal comporte deux extrémités distinctes agencées chacune pour former une butée sur laquelle une bille peut prendre appui.

Autrement dit, il n'y a pas de chemin de recirculation des billes. Les billes peuvent venir en butée à l'extrémité du chemin hélicoïdal. La construction de la vis à bille est simplifiée, la pièce moins chère à fabriquer.

Selon l'invention, ladite vanne comporte :
- un corps délimitant un conduit de circulation du fluide,
- un organe d'obturation apte à être déplacé entre une position de fermeture empêchant le passage du fluide dans le conduit et une position d'ouverture permettant le passage du fluide dans le conduit,
- le dispositif d'actionnement,
tel que décrit précédemment, actionnant l'organe d'obturation.

L'organe d'obturation, permettant de régler le débit de fluide traversant la vanne, est actionné par le dispositif comportant une vis à billes. Les performances de la vanne sont améliorées. Parmi les avantages procurés par la présence de la vis à billes dans le mécanisme d'actionnement de la vanne, on peut citer les faibles frottements, la faible usure, l'absence quasi-totale de jeu parasite.

Selon un premier mode de réalisation d'une vanne avec vis à billes, un élément parmi l'ensemble constitué de la vis et de l'écrou est configuré pour être fixe en translation et libre en rotation, l'autre élément étant configuré pour être libre en translation et fixe en rotation.

Plusieurs possibilités s'offrent pour assurer la conversion d'un mouvement de rotation en mouvement de translation. Dans ce premier mode de réalisation, un blocage en rotation et un blocage en translation sont répartis entre deux pièces distinctes, la vis et l'écrou.

Selon un premier exemple connu de l'état de l'art antérieur de mise en œuvre de ce premier mode de réalisation, l'écrou est fixe en translation et libre en rotation, la vis étant libre en translation et fixe en rotation, l'organe d'obturation étant lié à la vis, la rotation de l'écrou assurant un déplacement linéaire de la vis.

L'écrou peut tourner sur lui-même mais ne peut pas se translater. La vis peut se translater, mais ne peut pas tourner autour de son axe. Par conséquent, la rotation de l'écrou se traduit par un mouvement de translation de la vis. Le sens de rotation de l'écrou conditionne le sens de déplacement de la vis.

Le dispositif d'obturation de la vanne étant lié à la vis, le déplacement de la vis permet de modifier la position du dispositif d'obturation et ainsi de régler le débit traversant la vanne.

Selon un deuxième exemple connu de l'état de l'art antérieur de mise en oeuvre de ce premier mode de réalisation, la vis est fixe en translation et libre en rotation, l'écrou étant libre en translation et fixe en rotation, l'organe d'obturation étant lié à l'écrou, la rotation de la vis assurant un déplacement linéaire de l'écrou.

Dans ce cas, c'est l'écrou qui peut se translater, sans pouvoir tourner sur lui-même. L'organe d'obturation est lié à l'écrou. La vis peut tourner autour de son axe, mais ne peut se translater, un maintien axial étant assuré. La rotation de la vis engendre une translation de l'écrou, et permet donc de régler le débit traversant la vanne.

Selon un deuxième mode de réalisation d'une vanne avec vis à billes, un élément parmi l'ensemble constitué de la vis et de l'écrou est configuré pour être fixe en translation et fixe en rotation, l'autre élément étant configuré pour être libre en translation et libre en rotation.

Dans ce deuxième mode de réalisation, un blocage en rotation et un blocage en translation sont affectés à la même pièce, qui peut être soit la vis soit l'écrou.

Selon un exemple connu de l'état de l'art antérieur de mise en œuvre de ce deuxième mode de réalisation, l'écrou est fixe en translation et fixe en rotation, la vis étant libre en translation et libre en rotation, l'organe d'obturation étant lié à la vis, la rotation de la vis assurant simultanément un déplacement linéaire de la vis.

L'écrou est ici complètement immobilisé. La rotation de la vis engendre simultanément son déplacement axial. L'organe d'obturation est lié à la vis, la rotation de la vis permet donc de régler le débit traversant la vanne.

Selon l'invention, qui met en œuvre ce deuxième mode de réalisation, la vis est fixe en translation et fixe en rotation, l'écrou étant libre en translation et libre en rotation, l'organe d'obturation étant lié à l'écrou, la rotation de l'écrou assurant simultanément un déplacement linéaire d'un axe de l'écrou.

Dans ce cas, c'est la vis qui est immobilisée. La rotation de l'écrou provoque son déplacement axial. L'organe d'obturation est lié à l'écrou, la position de l'organe d'obturation est donc réglée par la rotation de l'écrou.

Selon l'invention, la vanne comporte un moteur électrique agencé pour entraîner en rotation l'écrou. Une commande du moteur électrique dans un premier sens de rotation permet d'augmenter l'ouverture de la vanne et ainsi d'augmenter le débit la traversant. Une commande dans le sens de rotation opposé permet de diminuer l'ouverture de la vanne et ainsi de réduire le débit.

Par exemple, le moteur électrique est de type à courant continu. Ce type de moteur est économique, fiable et facile à piloter par l'unité électronique de contrôle du moteur à combustion.

Selon l'invention, l'axe de rotation du moteur est perpendiculaire à l'axe de la vis.

La vanne possède alors une forme en « L ». Cette forme peut être plus facilement logeable dans l'environnement du moteur du véhicule.

Selon l'invention, la vanne comporte une roue dentée liée en rotation à l'écrou, la roue dentée étant entraînée par le moteur électrique. Une roue dentée est solidarisée en rotation avec l'écrou. L'entrainement de la roue dentée par le moteur électrique permet ainsi d'assurer la rotation de l'écrou.

De préférence, la roue dentée comporte une portion cylindrique creuse dans laquelle l'écrou est inséré, la portion cylindrique et l'écrou étant concentriques. L'écrou est inséré dans la roue dentée afin de constituer un assemblage.

Par exemple, la liaison entre l'écrou et la roue dentée est assurée par des cannelures formées sur la périphérie extérieure de l'écrou.

En variante, la roue dentée est fixée à l'écrou notamment par emmanchement, soudage, brasage, collage, vissage, clipage ou sertissage.

La roue dentée et l'écrou sont ainsi solidarisés sans risque de démontage intempestif pendant la vie du produit.

Selon un aspect de l'invention, la vis traverse la roue dentée d'une extrémité axiale de la roue dentée à l'autre extrémité axiale de la roue dentée.

Selon un mode de réalisation l'écrou coopère avec un roulement inséré dans un alésage du corps, l'écrou étant fixe par rapport à une bague intérieure du roulement. L'utilisation d'un roulement permet d'assurer la rotation de l'écrou avec un minimum de frottements. De plus, il est possible d'assurer simultanément le guidage radial et l'arrêt axial de l'écrou.

Selon un mode de réalisation de la vanne, l'organe d'obturation comporte une soupape.

Les vannes à soupape présente généralement de faibles niveaux de fuite.

Selon une caractéristique de l'invention, l'axe de la soupape est parallèle avec l'axe de la vis.

L'invention sera mieux comprise à la lecture des figures.
- La figure 1 représente, de manière schématique, un moteur à combustion équipé d'une vanne de recirculation de gaz d'échappement,
- La figure 2 est une vue en perspective d'une vanne de recirculation de gaz d'échappement équipant le moteur de la figure 1,
- La figure 3 est une vue en perspective d'une partie du dispositif d'actionnement compris dans la vanne de la figure 2,
- La figure 4 est une vue en coupe de l'écrou à billes compris dans le dispositif d'actionnement de la figure 3,
- La figure 5 est une vue en coupe de la vanne de la figure 2.
- Les figures 6a et 6b représentent de manière schématique une vanne selon un exemple non couvert par les revendications, pour lequel l'écrou à billes est fixe, la vanne étant en position fermée sur la figure 6a et en position ouverte sur la figure 6b.

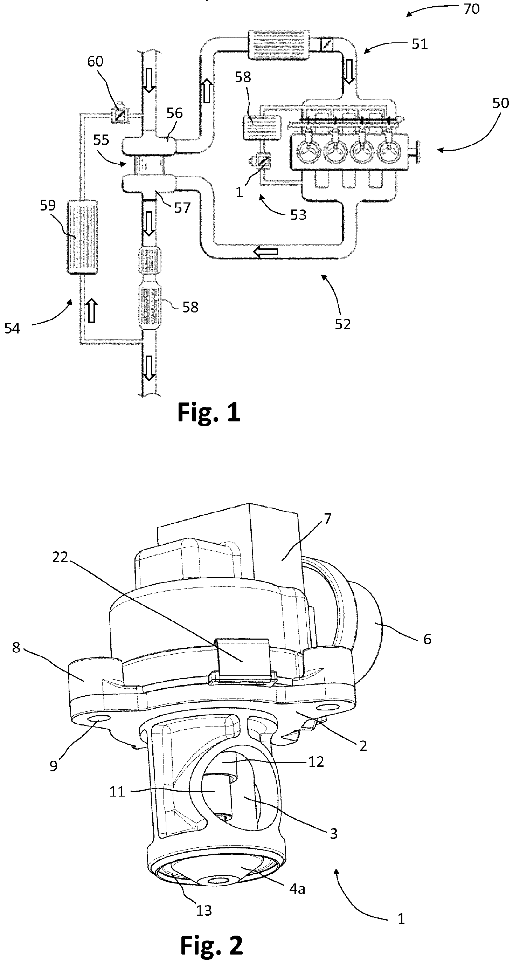

On a représenté sur la figure 1 un moteur à combustion 50.

Le moteur 50 est alimenté en air comburant par un circuit d'admission 51. Par air comburant, on entend un mélange comportant de l'air, des gaz d'échappement recirculés et des vapeurs de carburant provenant du réservoir. Le carburant, mis sous pression et amené dans chacune des chambres de combustion du moteur 50, brule dans chacun des cylindres du moteur 50. Cette combustion génère le travail mécanique fourni par le moteur. Après combustion, les gaz brulés sont évacués dans le circuit d'échappement 52.

Sur l'exemple représenté, le moteur 50 est suralimenté, c'est-à-dire que la pression de l'air d'admission est portée à une valeur supérieure à la pression atmosphérique avant son admission dans le moteur 50. Pour cela, un dispositif de suralimentation 55 comprend un compresseur centrifuge 56, entraîné en rotation par une turbine 57 qui est traversée par les gaz d'échappement. La détente des gaz d'échappement dans la turbine 57 fournit l'énergie nécessaire au compresseur 56 pour fournir le travail de compression de l'air d'admission. La suralimentation, bien connue de l'homme de métier, permet d'augmenter les performances du moteur à cylindrée égale, ou d'assurer les mêmes performances avec une cylindrée moindre. Une partie des gaz d'échappement traverse le circuit de recirculation 53 et est redirigée vers le circuit d'admission 51. Les gaz d'échappement recirculés sont prélevés dans le circuit d'échappement 52 en amont d'une turbine 57 d'un dispositif de suralimentation 55 du moteur 50 et sont recirculés dans le circuit d'admission 51 en aval d'un compresseur 56 du dispositif de suralimentation 55 du moteur 50.

La vanne 1 est agencée pour faire circuler des gaz d'échappement entre un circuit d'échappement 52 d'un moteur à combustion 50 et un circuit d'admission 51 en gaz comburant du moteur à combustion 50. Autrement dit, la vanne 1 permet de régler le débit de gaz traversant le circuit de recirculation de gaz d'échappement 53. Un échangeur de chaleur 58 permet de refroidir les gaz d'échappement recirculés.

Ce type de circuit de recirculation de gaz d'échappement correspond à l'architecture dite « haute pression », bien connue de l'homme de métier.

Un deuxième circuit de recirculation 54 de gaz d'échappement est également présent. Ce deuxième circuit correspond à l'architecture dite « basse pression ». Les gaz d'échappement sont en effet prélevés du circuit d'échappement 52 en aval de la turbine 57 et en aval du dispositif de dépollution 58. Le dispositif de dépollution 58 convertit l'essentiel des polluants gazeux et piège les particules solides. Une partie des gaz d'échappement est ainsi réintroduite dans le circuit d'admission du moteur 50 après avoir traversé le circuit de recirculation 54. Le circuit de recirculation 54 est connecté au circuit d'admission 2 en amont du compresseur 56. Une vanne 60 permet de régler le débit de gaz traversant le circuit de recirculation 54. Un échangeur de chaleur 59 permet de refroidir les gaz traversant le circuit.

Ce type de circuit de recirculation de gaz d'échappement correspond à l'architecture dite « basse pression ». Le circuit haute pression et le circuit basse pression se complètent afin d'obtenir un débit d'EGR très élevé.

La figure 2 décrit la constitution de la vanne 1 de recirculation de gaz d'échappement.

La vanne 1 comporte :
- un corps 2 délimitant un conduit 3 de circulation du fluide,
- un organe d'obturation 4 apte à être déplacé entre une position de fermeture empêchant le passage du fluide dans le conduit 3 et une position d'ouverture permettant le passage du fluide dans le conduit 3.

L'organe d'obturation 4 est ici une soupape. La tige de soupape 11 coulisse linéairement dans le guide de soupape 12. La vanne est représentée sur la figure 2 en position fermée. La tête de soupape 4a, solidarisée à la tige de soupape 11, repose sur le siège de soupape 13. Dans cette position, le débit traversant le conduit 3 est nul.

La vanne 1 comporte un dispositif d'actionnement 40, non représenté sur la figure 2, actionnant l'organe d'obturation 4.

Un moteur électrique 5, également non représenté sur cette vue extérieure de la vanne 1, permet de commander la position de la tête de soupape 4a et de régler le débit traversant la vanne 1. Le moteur électrique 5 est maintenu par un logement 6 et un capot 7 vient fermer la vanne 1. Les clips de fixation 22 assurent le maintien du capot 7 sur le corps 2 de la vanne.

La vanne 1 peut être assemblée sur le moteur à combustion 50 par vissage, les vis de fixation traversant les trous 9 réalisés dans les bossages 8.

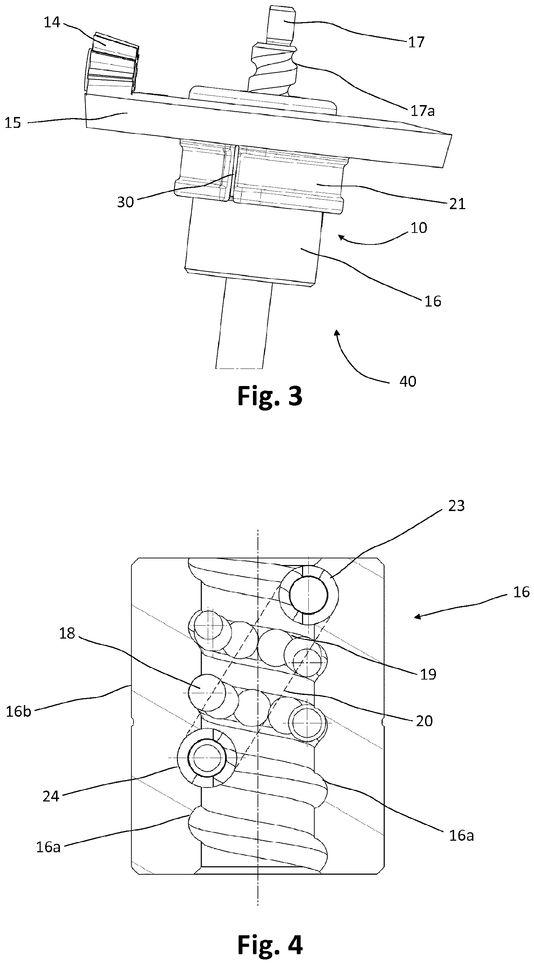

Les figures 3 et 4 détaillent la constitution du mécanisme d'actionnement 40 permettant de déplacer la soupape 4.

Le dispositif d'actionnement 40 pour moteur à combustion comporte une vis à billes 10, la vis à billes comprenant :
- un écrou 16,
- une vis 17 liée cinématiquement à l'écrou 16,
- des billes 18 agencées pour assurer un mouvement relatif de l'écrou 16 par rapport à la vis 17.

Les billes 18, visibles sur la figure 4, sont intercalées entre l'écrou et la vis, il n'y a pas de contact direct entre l'écrou et la vis.

Les billes 18 circulent dans un chemin hélicoïdal 19 formé conjointement sur l'écrou 16 et sur la vis 17. Lorsque l'écrou et la vis ont un mouvement relatif l'un par rapport à l'autre, les billes roulent dans le chemin hélicoïdal 19.

Le chemin hélicoïdal 19 est formé partiellement sur une paroi interne 16a de l'écrou et sur une paroi externe 17a de la vis. Le chemin hélicoïdal 19 est formé d'une portion de section circulaire creuse, balayant un profil hélicoïdal. Les billes 18 sont situées entre la paroi interne 16a de l'écrou et la paroi externe 17a de la vis. Les billes roulent à l'intérieur du chemin hélicoïdal 19 qui guide les billes 18 tout en assurant leur maintien. Le rayon du profil du chemin hélicoïdal 19 est légèrement supérieur à celui des billes 18, afin de minimiser les frottements tout en garantissant un faible jeu, particulièrement dans la direction axiale. Un tel dispositif présente un faible niveau de frottement et très peu de jeu. La fiabilité de la vanne est ainsi améliorée, ainsi que son rendement mécanique.

La figure 4 détaille l'écrou à billes 16. La vis à billes 10 comporte un chemin de récupération 20 des billes 18 permettant de recevoir les billes 18 venant d'une extrémité 23 du chemin hélicoïdal 19 et de les transférer vers l'autre extrémité 24 du chemin hélicoïdal 19. Les billes 18 se déplaçant lors du mouvement relatif de l'écrou 16 par rapport à la vis 17, les billes 18 doivent être recirculés pour permettre un mouvement continu de l'écrou 16 par rapport à la vis 17.

Sur l'exemple de la figure 4, le chemin de récupération 20 des billes 18 est formé entre une paroi externe 16b de l'écrou 16 et une paroi interne 16a de l'écrou 16. Plus précisément, le chemin de récupération 20 des billes 18 comporte un tube solidarisé à l'écrou 16. Le tube est inséré dans une cavité réalisée dans l'épaisseur de la paroi de l'écrou à billes 16. Le tube ne dépasse aucunement de la surface de l'écrou 16.

Selon un autre mode de réalisation non représenté, le chemin hélicoïdal comporte deux extrémités distinctes agencées chacune pour former une butée sur laquelle une bille peut prendre appui.

Autrement dit, il n'y a pas de tube de recirculation des billes. En faisant tourner l'écrou par rapport à la vis, dans un premier sens de rotation, d'une valeur angulaire suffisamment élevée, la bille la plus proche d'une extrémité du chemin hélicoïdal vient en butée sur une première extrémité du chemin hélicoïdal. En faisant tourner l'écrou par rapport à la vis dans le sens opposé, d'une valeur angulaire suffisamment élevée, c'est la bille la proche de la deuxième extrémité du chemin hélicoïdal qui vient en butée sur cette deuxième extrémité. Il n'y a pas de recirculation continue des billes. Cette solution est plus simple à fabriquer, puisqu'il n'est pas nécessaire de prévoir de chemin de récupération des billes. Le frottement dans le mécanisme est par contre plus élevé une fois que les billes sont en butée, puisque le roulement sans glissement des billes dans le chemin hélicoïdal n'est plus possible. La vanne 1 possédant un organe d'obturation 4 à déplacement linéaire, le dispositif d'actionnement 40 doit convertir un mouvement de rotation d'une pièce en un mouvement de translation d'une autre pièce.

Dans un premier mode de réalisation, non couvert par les revendications, d'une vanne avec vis à billes, un blocage en rotation et un blocage en translation sont répartis entre deux pièces distinctes, qui sont la vis et l'écrou.

Pour cela, un élément parmi l'ensemble constitué de la vis 17 et de l'écrou 16 est configuré pour être fixe en translation et libre en rotation, l'autre élément étant configuré pour être libre en translation et fixe en rotation.

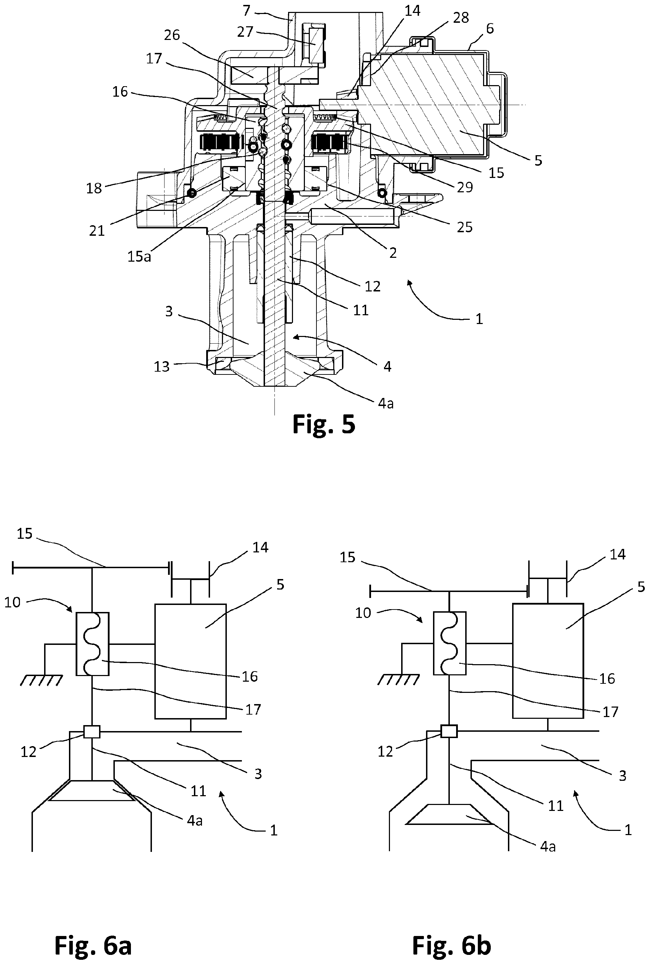

Selon un premier exemple de mise en oeuvre, non couvert par les revendications, et correspondant à la figure 5, l'écrou 16 est, relativement au corps de vanne, fixe en translation et libre en rotation, la vis 17 étant libre en translation et fixe en rotation. L'organe d'obturation 4 est lié à la vis 17, et la rotation de l'écrou 16 assure un déplacement linéaire de la vis 17.

L'écrou 16 peut tourner sur lui-même mais ne peut pas se translater. La vis 17 peut se translater, mais ne peut pas tourner sur elle-même. Par conséquent, la rotation de l'écrou 16 se traduit par un mouvement de translation de la vis 17. Le sens de rotation de l'écrou 16 conditionne le sens de déplacement de la vis 17.

L'axe de la soupape 4 est parallèle avec l'axe de la vis 17. Plus précisément, l'axe de la soupape 4 coïncide avec l'axe de la vis 17. La soupape 4 et la vis 17 sont ainsi facilement solidarisées et l'encombrement de l'assemblage est réduit, particulièrement dans une direction radiale à l'axe de la soupape.

Selon un autre mode de mise en oeuvre, non couvert par les revendications, la vis et la tige de soupape constituent une pièce unique, sur laquelle la tête de soupape est rapportée.

La soupape 4 étant solidaire de la vis 17, le déplacement de la vis 17 permet de modifier la position de la soupape 4 et ainsi de régler le débit traversant la vanne 1.

La vanne 1 comporte un moteur électrique 5 agencé pour entraîner en rotation l'écrou 16.

Le moteur électrique 5 est de type à courant continu. Le moteur électrique 5 de la vanne 1 est commandé par l'unité électronique de commande du moteur à combustion, non représentée. Une commande du moteur électrique 5 dans un premier sens de rotation permet d'augmenter l'ouverture de la vanne 1 et ainsi d'augmenter le débit la traversant. Une commande dans le sens de rotation opposé permet de diminuer l'ouverture de la vanne 1 et ainsi de réduire le débit.

Un capteur de position, non représenté, permet à l'unité électronique de commande de connaître la position réelle de la soupape et d'assurer le respect de la consigne de position.

L'ouverture de la vanne 1 est ajustée en continu afin d'adapter le débit aux débits de fonctionnement du moteur à combustion 50.

Lorsque le moteur électrique 5 n'est pas commandé, selon l'invention un ressort de rappel 29 permet de faire revenir la roue dentée 15 à sa position de repos et ainsi de ramener la soupape 4 en position fermée. Le ressort de rappel 29 est maintenu dans une gorge 30 solidaire de la roue dentée 15. Ainsi, le débit à travers la vanne 1 est nul en cas de défaillance du système de commande.

Plusieurs tours de l'écrou 16 peuvent être nécessaires afin de parcourir toute la course d'ouverture de la soupape 4. Il est donc possible d'avoir un rapport de démultiplication important. Cela permet d'avoir une force disponible pour bouger la soupape élevée, sans utiliser de moteur électrique possédant un fort couple. Un moteur électrique peu encombrant peut ainsi être utilisé.

Sur l'exemple de la figure 5, l'axe de rotation du moteur 5 est perpendiculaire à l'axe de la vis 17. La vanne possède alors une forme en L. L'espace situé sous le logement 6 du moteur électrique est libre. Cette particularité permettre à la vanne d'être plus facilement logeable dans l'environnement du moteur du véhicule.

Le moteur 5 est appuyé sur la surface de contact 28 du corps, et est maintenu en place par le logement 6. Le logement 6 est serti sur le capot 7, les deux pièces sont ainsi solidarisées.

Selon un deuxième exemple, non représenté, de mise en oeuvre de ce premier mode de réalisation non couvert par les revendications d'une vanne avec vis à billes, la vis 17 est fixe en translation et libre en rotation, l'écrou 16 étant libre en translation et fixe en rotation, l'organe d'obturation 4 étant lié à l'écrou 16, la rotation de la vis 17 assurant un déplacement linéaire de l'écrou 16.

Dans ce cas, c'est l'écrou qui peut se translater, sans pouvoir tourner sur lui-même. L'organe d'obturation est lié à l'écrou. La vis peut tourner autour de son axe, mais ne peut se translater, un maintien axial étant assuré. La rotation de la vis engendre une translation de l'écrou, et permet donc de régler le débit traversant la vanne.

Selon un deuxième mode de réalisation d'une vanne avec vis à billes, un élément parmi l'ensemble constitué de la vis 17 et de l'écrou 16 est configuré pour être fixe en translation et fixe en rotation, l'autre élément étant configuré pour être libre en translation et libre en rotation. Autrement dit, le blocage en rotation et le blocage en translation sont affectés à la même pièce, qui peut être soit la vis soit l'écrou.

Selon un exemple de mise en oeuvre, non couvert par les revendications, et représenté sur les figures 6a et 6b, l'écrou 16 est fixe en translation et fixe en rotation, la vis 17 étant libre en translation et libre en rotation, l'organe d'obturation 4 étant lié à la vis 17, la rotation de la vis 17 assurant simultanément un déplacement linéaire d'un axe de la vis 17.

L'écrou 16 est dans ce cas immobilisé. La rotation de la vis 17 engendre simultanément son déplacement axial. L'organe d'obturation 4a est lié à la vis 17, la rotation de la vis 17 permet donc de régler le débit traversant la vanne.

Sur cet exemple de mise en oeuvre, l'axe de rotation du moteur 5 est parallèle à l'axe de la vis 17. Cette configuration peut permettre de limiter l'encombrement radial de la vanne 1. La vis 17 et la tige de soupape 11 sont coaxiales.

Selon un autre agencement, non représenté mais conforme à l'invention, de ce deuxième mode de réalisation, la vis est fixe en translation et fixe en rotation, l'écrou étant libre en translation et libre en rotation, l'organe d'obturation étant lié à l'écrou, la rotation de l'écrou assurant simultanément un déplacement linéaire d'un axe de l'écrou.

Dans ce cas, c'est la vis qui est immobilisée. La rotation de l'écrou provoque son déplacement axial. L'organe d'obturation est lié à l'écrou.

On peut voir sur la figure 5 que la vanne 1 comporte une roue dentée 15 liée en rotation à l'écrou 16, la roue dentée 15 étant entraînée par le moteur électrique 5. Plus précisément, l'arbre du moteur 5 comporte un pignon 14 engrenant avec la roue dentée 15.

La roue dentée 15 comporte une portion cylindrique creuse 15a dans laquelle l'écrou 16 est inséré, la portion cylindrique 15a et l'écrou 16 étant concentriques. L'ajustement entre la roue dentée 15 et l'écrou 16 est déterminé pour obtenir un emmanchement serré de l'écrou 16 dans la roue dentée 15. Les deux pièces sont ainsi solidarisées sans risque de démontage intempestif.

Selon un mode de réalisation non représenté, la liaison entre l'écrou 16 et la roue dentée 15 est assurée par des cannelures formées sur la périphérie extérieure de l'écrou 16.

La roue dentée 15 peut aussi être fixée à l'écrou 16 notamment par soudage, brasage, collage, vissage, clipage ou sertissage.

La vis 17 traverse la roue dentée 15 d'une extrémité axiale de la roue dentée 15 à l'autre extrémité axiale de la roue dentée 15.

Selon l'exemple de la figure 5 non couvert par les revendications, 5- l'écrou 16 coopère avec un roulement 21 inséré dans un alésage 25 du corps 2, l'écrou 16 étant fixe par rapport à une bague intérieure du roulement 21.

La bague extérieure du roulement 21 est emmanchée dans l'alésage 25, le roulement est donc bloqué axialement. L'écrou est lui emmanché dans la bague intérieure du roulement 21. Le roulement 21 assure ainsi simultanément le guidage radial et l'arrêt axial de l'écrou 16. De plus, l'utilisation d'un roulement permet d'assurer la rotation de l'écrou avec un minimum de frottements. Sur l'exemple de la figure 5 non couvert par les revendications, la vis 17 comporte un dispositif d'anti-rotation.

La vis comporte une zone d'appui décentrée par rapport à l'axe de la vis. Cette zone d'appui est mise en contact avec un élément fixe 27 de la vanne afin d'empêcher la rotation de la vis 17 autour de son axe, tout en permettant sa translation le long de son axe.

Le dispositif d'anti-rotation est agencé de sorte qu'une partie saillante 26 de la vis 17 est insérée dans une fente 27 agencée dans une pièce liée rigidement au corps 2 de la vanne 1, l'axe de la fente 27 s'étendant selon une direction parallèle à l'axe de translation de la vis 17. L'insertion d'une partie de la vis dans la fente permet d'empêcher la rotation de la vis autour de son axe, par contre permet une translation de la vis le long de son axe.

La largeur de la fente 17 est constante, la largeur s'étendant dans une direction perpendiculaire à l'axe de translation de la vis 17. La partie liée au corps de vanne du dispositif d'anti-rotation est ainsi simple à réaliser.

Selon un mode de réalisation, la partie saillante 26 de la vis 17 est une pièce rapportée fixée à la vis 17.

## Revendications

1. Vanne (1) de circulation de gaz d'échappement agencée pour faire circuler des gaz d'échappement entre un circuit d'échappement (52) d'un moteur à combustion (50) et un circuit d'admission (51) en gaz comburant du moteur à combustion (50), comportant :
- un corps (2) délimitant un conduit (3) de circulation des gaz d'échappement,
- un organe d'obturation (4) apte à être déplacé entre une position de fermeture empêchant le passage des gaz d'échappement dans le conduit (3) et une position d'ouverture permettant le passage des gaz d'échappement dans le conduit (3),
- un dispositif (40) d'actionnement pour moteur à combustion actionnant l'organe d'obturation (4),
le dispositif d'actionnement (40) comportant une vis à billes (10), la vis à billes comprenant :
- un écrou (16),
- une vis (17) liée cinématiquement à l'écrou (16),
- des billes (18) agencées pour assurer un mouvement relatif de l'écrou (16) par rapport à la vis (17),
- un moteur électrique (5),
**caractérisée en ce que** :
- le moteur électrique est agencé pour entrainer en rotation l'écrou, l'axe de rotation du moteur est perpendiculaire à l'axe de la vis et la vis (17) est configurée pour être fixe en translation et fixe en rotation, l'écrou étant configuré pour être libre en translation et libre en rotation,
- une roue dentée (15) est liée en rotation à l'écrou (16), la roue dentée (15) étant entrainée par le moteur électrique (5),
- un ressort de rappel (29) permet de faire revenir la roue dentée (15) à sa position de repos et ainsi de ramener la soupape (4) en position fermée, le ressort de rappel (29) étant maintenu dans une gorge (30) solidaire de la roue dentée (15).

2. Vanne selon la revendication précédente, selon laquelle les billes (18) circulent dans un chemin hélicoïdal (19) formé conjointement sur l'écrou (16) et sur la vis (17).

3. Vanne (1) selon l'une des revendications 1 à 2, selon laquelle l'organe d'obturation (4) comporte une soupape (4a).

## Patentansprüche

1. Abgaszirkulationsventil (1), das dazu angeordnet ist, Abgase zwischen einem Abgasstrang (52) eines Verbrennungsmotors (50) und einem Ansaugtrakt (51) für Verbrennungsgas des Verbrennungsmotors (50) zirkulieren zu lassen, umfassend:
- einen Körper (2), der eine Leitung (3) zur Zirkulation der Abgase begrenzt,
- ein Schließorgan (4), das dazu in der Lage ist, zwischen einer Schließposition, die den Durchgang der Abgase in die Leitung (3) verhindert, und einer Öffnungsposition, die den Durchgang der Abgase in die Leitung (3) ermöglicht, bewegt zu werden,
- eine Betätigungsvorrichtung (40) für den Verbrennungsmotor, die das Schließorgan (4) betätigt, wobei die Betätigungsvorrichtung (40) eine Kugelumlaufspindel (10) aufweist, wobei die Kugelumlaufspindel Folgendes umfasst:
- eine Mutter (16),
- eine kinematisch mit der Mutter (16) verbundene Schraube (17),
- Kugeln (18), die dazu angeordnet sind, eine Relativbewegung der Mutter (16) in Bezug auf die Schraube (17) zu gewährleisten,
- einen Elektromotor (5),
**dadurch gekennzeichnet, dass**:
- der Elektromotor dazu angeordnet ist, die Mutter drehend anzutreiben, wobei die Drehachse des Motors senkrecht zur Achse der Schraube verläuft und die Schraube (17) so konfiguriert ist, dass sie translatorisch und rotatorisch feststehend ist, wobei die Mutter so konfiguriert ist, dass sie translatorisch und rotatorisch bewegbar ist,
- ein Zahnrad (15) rotatorisch mit der Mutter (16) verbunden ist, wobei das Zahnrad (15) durch den Elektromotor (5) angetrieben wird,
- eine Rückstellfeder (29) es ermöglicht, das Zahnrad (15) in seine Ruheposition zurückzuholen und damit das Ventil (4) in die Schließposition zurückzubringen, wobei die Rückstellfeder (29) in einer Nut (30) gehalten wird, die fest mit dem Zahnrad (15) verbunden ist.

2. Ventil nach dem vorangehenden Anspruch, wobei die Kugeln (18) in einer schraubenförmigen Bahn (19) zirkulieren, die zugleich an der Mutter (16) und an der Schraube (17) ausgebildet ist.

3. Ventil (1) nach einem der Ansprüche 1 bis 2, wobei das Schließorgan (4) ein Ventil (4a) umfasst.

## Claims

1. Valve (1) for circulating exhaust gas arranged to make exhaust gases circulate between an exhaust circuit (52) of a combustion engine (50) and an intake circuit (51) for fuel gas for the combustion engine (50), comprising:
- a body (2) delimiting an exhaust gas circulation duct (3),
- a shutting member (4) capable of being displaced between a closed position preventing the passage of the exhaust gases in the duct (3) and an open position allowing the passage of the exhaust gases in the duct (3),
- an actuation device (40) for a combustion engine actuating the shutting member (4), the actuation device (40) comprising a ball screw (10), the ball screw comprising:
- a nut (16),
- a screw (17) kinematically linked to the nut (16),
- balls (18) arranged to ensure a relative movement of the nut (16) with respect to the screw (17),
- an electric motor (5),
**characterized in that**:
- the electric motor is arranged to drive the nut in rotation, the axis of rotation of the motor is at right angles to the axis of the screw and the screw (17) is configured to be fixed in translation and fixed in rotation, the nut being configured to be free in translation and free in rotation,
- a toothed wheel (15) is linked in rotation to the nut (16), the toothed wheel (15) being driven by the electric motor (5),
- a return spring (29) makes it possible to return the toothed wheel (15) to its idle position and thus return the valve (4) to the closed position, the return spring (29) being held in a groove (30) integral to the toothed wheel (15).

2. Valve according to the preceding claim, according to which the balls (18) circulate in a helical path (19) formed jointly on the nut (16) and on the screw (17).

3. Valve (1) according to one of Claims 1 to 2, according to which the shutting member (4) comprises a valve (4a).
